# EUROPEAN PATENT APPLICATION

(11) **EP 3 451 751 A1**
(43) Date of publication of application: **06.03.2019**
(21) Application number: 17789734.5
(22) Date of filing: 28.04.2017
(51) Int. Cl.: H04W 52/34

(54) **USER EQUIPMENT, BASE STATION, AND COMMUNICATION METHOD**

(30) Priority: 28.04.2016 JP 2016091553; 02.02.2017 JP 2017017985
(71) Applicant: NTT DOCOMO, INC., Chiyoda-ku Tokyo 100-6150 (JP)
(72) Inventor: TAKAHASHI, Hideaki, Tokyo 100-6150 (JP); TESHIMA, Kunihiko, Tokyo 100-6150 (JP); UMEDA, Hiromasa, Tokyo 100-6150 (JP); ABETA, Sadayuki, Tokyo 100-6150 (JP)
(74) Representative: Hoffmann Eitle
(86) International application number: PCT/JP2017/017093
(87) International publication number: WO 2017/188453

(57) **Abstract**

A user equipment in a mobile communication system including a base station and the user equipment, including: a receiving unit that receives a predetermined signaling value which is a signaling value other than a default signaling value and a maximum transmission power value associated with the predetermined signaling value from the base station; and a transmission power control unit that controls transmission power by applying the maximum transmission power value corresponding to the predetermined signaling value when the user equipment supports the predetermined signaling value, wherein the predetermined signaling value is a value which is predetermined as a value common to all bands used in the mobile communication system.

## Description

### TECHNICAL FIELD

The present invention relates to a technique of setting a maximum transmission power value in a user equipment in a mobile communication system.

### BACKGROUND ART

In a Long Term Evolution (LTE) scheme, for example, out-of-band radiation regulations have been established not to give interference to radio systems used in the same area. In general, the regulations have been established according to domestic laws of each country, and telecommunications carriers are required to operate wireless systems based on this standard.

On the other hand, depending on a band use method or the like, it may be unable to achieve attenuation for an allowable interference level to adjacent systems.

Particularly, in LTE, since wide band transmission is performed, and spurious noise is likely to reach at a high level at a more distant frequency, there are cases in which it is impractical to satisfy such a regulation through suppression by analog devices such as duplexers.

In order to deal with this case, in the LTE scheme, regulations have been made so that transmission power of a user equipment UE can be reduced according to a transmission position and the number of resource blocks (RBs). Specifically, an allowable maximum reduction amount of transmission power is specified as "additional-maximum power reduction (A-MPR)."

However, since radio systems to be protected do not always exist in each region of each country, the application of the A-MPR is allowed when a specific signal "a network signaling (NS) value" (hereinafter, referred to as an "NS value") is broadcast from an NW (a base station eNB)).

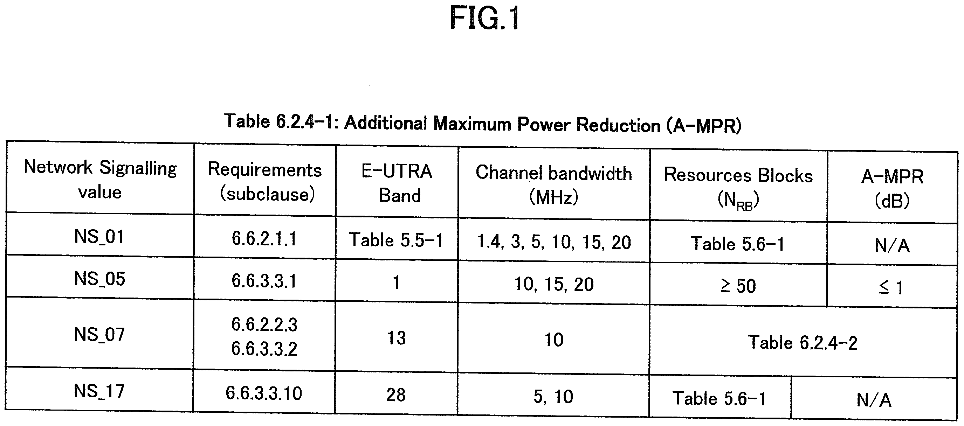

Fig. 1 illustrates an example of the NS value and a corresponding transmission condition (requirements, a band, a bandwidth, the number of RBs, an allowable A-MPR value) (an excerpt from Table 6.2.4-1 of Non-Patent Document 1). More specifically, a "transmission condition" indicates an "additional spectrum emission mask and additional spurious emissions requirements." For example, when the number of RBs corresponding to NS_05 in Fig. 1 is used, the user equipment UE who resides in a certain cell and receives NS_05 from the base station eNB is allowed to use A-MPR of 1 dB or less for transmission power specified in "6.6.3.3.1 Minimum requirement (network signalled value "NS_05")" in Non-Patent Document 1. The NS value is specified for each band (an operating band) as necessary.

Further, in LTE, it is specified that the base station eNB broadcasts a plurality of NS values, and the user equipment UE that has received a plurality of NS values applies an NS value having a highest priority among NS values applicable by the user equipment UE from a plurality of NS values (Non-Patent Document 2). Further, it is also stated in Non-Patent Document 2 that P-max (a maximum transmission power value of UE) corresponding to each NS value is broadcast together with an NS value, and the user equipment UE applies P-max corresponding to the NS value applied by the user equipment UE. All the user equipments UE can recognize NS_01 (without A-MPR) by default in an arbitrary band and an arbitrary channel bandwidth. NS_01 can be referred to as a "default signaling value."

### CITATION LIST

### NON-PATENT DOCUMENT

Non-Patent Document 1: 3 GPP TS 36.101 V 12.8.0 (2015-07)
Non-Patent Document 2: 3GPP TS 36.331 V 10.19.0 (2015-12)
Non-Patent Document 3: 3GPP TS 36.101 V13.3.0 (2016-03)
Non-Patent Document 4: 3GPP TS 36.304 V 10.9.0 (2015-12)

### SUMMARY OF THE INVENTION

### PROBLEM TO BE SOLVED BY THE INVENTION

There is a demand for the application of a new value different from P-max which is already specified to a specific type of user equipment UE. As an example, in order to reduce UL interference caused by radio waves outputted from the user equipments UE flying in the air (example:drone), a demand for the application of a value smaller than P-max which is already specified to the user equipments UE is considered.

Here, as illustrated in Fig. 1, according to previous specifications, the NS value is basically specified for each band. Further, P-max is associated with the NS value. Therefore, for example, when new P-max is applied to all bands, it is necessary to specify an NS value for applying new P-max for each band. However, there are few reserved spaces to specify new NS values, and it is unable to specify new NS values for all bands. Thus, for example, it is possible to set appropriate P-max (for example, small P-max) in a user equipment UE that supports a certain band, but it may be unable to set appropriate P-max in user equipments UE that support other bands.

The present invention was made in light of the foregoing, and it is an object of the present invention to provide a technique capable of enabling an appropriate maximum transmission power value to be applied to a user equipment in a mobile communication system regardless of a band supported by the user equipment.

### MEANS FOR SOLVING PROBLEM

According to the embodiment of the present invention, provided is a user equipment in a mobile communication system including a base station and the user equipment, including: a receiving unit that receives a predetermined signaling value which is a signaling value other than a default signaling value and a maximum transmission power value associated with the predetermined signaling value from the base station; and a transmission power control unit that controls transmission power by applying the maximum transmission power value corresponding to the predetermined signaling value when the user equipment supports the predetermined signaling value, wherein the predetermined signaling value is a value which is predetermined as a value common to all bands used in the mobile communication system.

### EFFECT OF THE INVENTION

According to an embodiment of the present invention, a technique capable of enabling an appropriate maximum transmission power value to be applied to a user equipment in a mobile communication system regardless of a band supported by the user equipment is provided.

### BRIEF DESCRIPTION OF DRAWINGS

Fig. 1 is a diagram illustrating an example of A-MPR;
Fig. 2 is a configuration diagram of a communication system according to an embodiment of the present invention;
Fig. 3 is a diagram illustrating a specification change example according to an embodiment of the present invention;
Fig. 4A is a diagram illustrating an example of a SIB1 message;
Fig. 4B is a diagram illustrating an example of a SIB1 message;
Fig. 5 is a diagram illustrating a specification example of an operation when a SIB1 message is received;
Fig. 6 is a diagram illustrating an example of a process sequence;
Fig. 7 is a diagram illustrating a specification example related to cell selection/cell reselection;
Fig. 8 is a flowchart for explaining operation of a user equipment UE in a modified example;
Fig. 9 is a diagram showing a specification change example on SIB1 in a first example in the modified example;
Fig. 10A is a diagram showing a specification change example on in a first example in the modified example;
Fig. 10B is a diagram showing a specification change example on SIB1 in a first example in the modified example;
Fig. 11 is a diagram showing a specification change example on SIB3 in a first example in the modified example;
Fig. 12A is a diagram showing a specification change example on SIB3 in a first example in the modified example;
Fig. 12B is a diagram showing a specification change example on SIB3 in a first example in the modified example;
Fig. 13 is a diagram showing a specification change example on SIB5 in a first example in the modified example;
Fig. 14A is a diagram showing a specification change example on SIB5 in a first example in the modified example;
Fig. 14B is a diagram showing a specification change example on SIB5 in a first example in the modified example;
Fig. 15 is a diagram showing a specification change example on in a second example in the modified example;
Fig. 16A is a diagram showing a specification change example on in a second example in the modified example;
Fig. 16B is a diagram showing a specification change example on SIB1 in a second example in the modified example;
Fig. 17 is a diagram showing an application determination method example 1 in the modified example;
Fig. 18 is a diagram showing an application determination method example 2 in the modified example;
Fig. 19 is a diagram showing an application determination method example 1 in the modified example;
Fig. 20 is a diagram showing an application determination method example 2 in the modified example;
Fig. 21 is a configuration diagram of a user equipment UE;
Fig. 22 is a configuration diagram of a base station eNB; and
Fig. 23 is a hardware configuration diagram of a user equipment UE and a base station eNB.

### MODE(S) FOR CARRYING OUT THE INVENTION

Hereinafter, an exemplary embodiment of the present invention will be described with reference to the appended drawings. An embodiment to be described below is merely an example, and an embodiment to which the present invention is applied is not limited to the following embodiment. For example, a communication system of the present embodiment is assumed to support LTE including LTE-Advanced, but an embodiment of the present invention is not limited to LTE and applicable to other schemes. For example, an embodiment of the present invention may be applied to SUPER 3G, IMT-Advanced, 4G, 5G, Future Radio Access (FRA), W-CDMA, GSM, CDMA 2000, Ultra Mobile Broadband (UMB) IEEE 802.11 (Wi-Fi), IEEE 802.16 (WiMAX), IEEE 802.20, Ultra-WideBand (UWB), Bluetooth (registered trademark), or next generation systems extended based on these standards.

Hereinafter, unless otherwise stated, "LTE" is used in a broad sense including LTE-Advanced and schemes subsequent to LTE-Advanced (for example, 5G).

### (System configuration and operation overview)

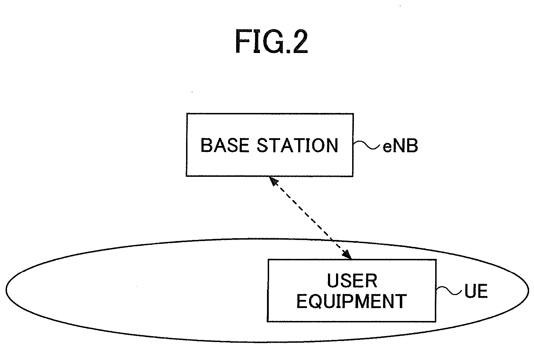

Fig. 2 is a configuration diagram of a communication system according to an embodiment of the present invention. As illustrated in Fig. 2, the communication system of the present embodiment is a mobile communication system including a base station eNB and a user equipment UE. In Fig. 2, one base station eNB and one user equipment UE are illustrated, but this is an example, and the number of base stations eNB and the number of user equipments UE may be two or more. Further, the user equipment UE is not limited to a specific type of terminal. For example, the user equipment UE may be a common smart phone, a terminal that flies in the air, an MTC terminal, or any other terminal.

In the present embodiment, the base station eNB has a function of broadcasting an entry list including an NS value and a maximum transmission power value (P-max) corresponding to the NS value for each band supported by the base station eNB through system information (SIB1: SystemInformationBlockType 1 message) (Non-Patent Document 2).

The user equipment UE selects an NS value with the highest priority (an NS value which is listed first) among NS values applicable by the user equipment UE among a plurality of NS values in the list corresponding to the band applied by the user equipment UE, and selects P-max corresponding to the NS value.

As an example, for a certain band applied by the user equipment UE, the base station eNB transmits NS-10, NS-20, and NS-30 (the descending order of priorities) and P-max 10, P-max 20, and P-max 30 as P-max corresponding to NS-10, NS-20, and NS-30 respectively. Then, when the user equipment UE applies NS-20, the user equipment UE selects and applies P-max 20 corresponding to NS-20.

As stated in Non-Patent Document 3 (6.2.5 Configured transmitted power), the user equipment UE sets P_{CMAX,c} which is configured maximum transmission power (configured maximum output power) using P-max of a serving cell c as P_{EMAX,c}, and controls the transmission power such that the transmission power does not exceed P_{CMAX,c}. Further, P_{CMAX,c} does not exceed P_{EMAX,c} (P-max of the serving cell c) . In other words, "P-max" can be referred to as a "maximum transmission power value." Further, as stated in Non-Patent Document 4, P-max is also used for cell selection/cell reselection.

### (Specification example)

In the present embodiment, a new NS value is introduced so that appropriate P-max can be set in the user equipment UE regardless of a band supported by the user equipment UE. Specifically, an NS value which is a value common to all bands (E-UTRA bands) is introduced. The NS value is a value common to all channel bandwidths. The A-MPR, RB restrictions, and the like are assumed not to be applied to the NS value. However, the A-MPR, RB restrictions, and the like may be applied to the NS value.

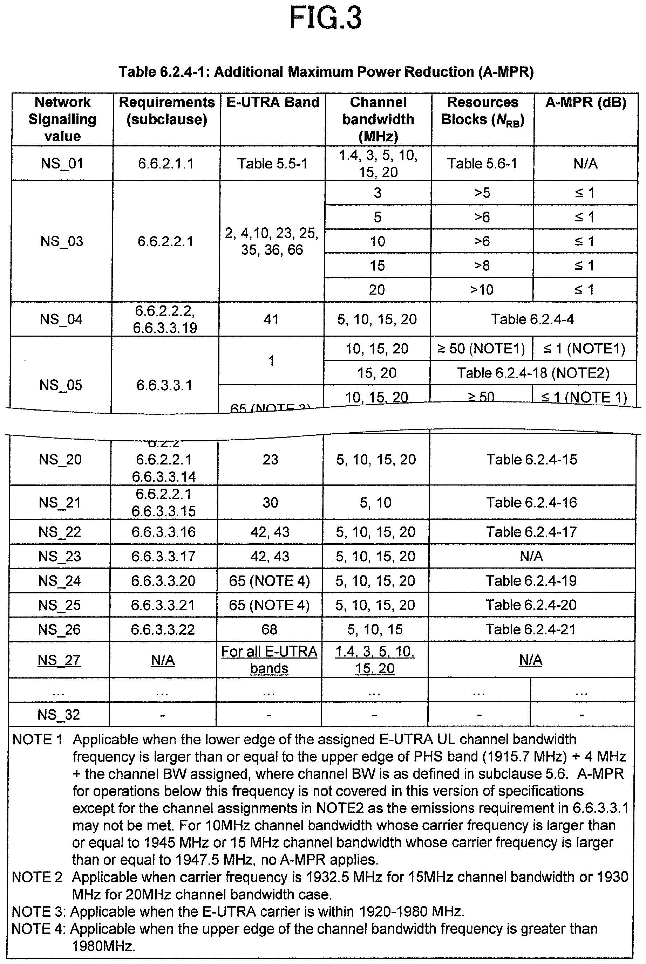

An example of a specification modification in this case is illustrated in Fig. 3. Fig. 3 illustrates a modified example from "Table 6.2.4-1: Additional Maximum Power Reduction (A-MPR)" (excerpt) in Non-Patent Document 3, and changes are underlined.

As illustrated in Fig. 3, NS_27 is added as a new NS value. For NS_27, "Requirements", "Resources Blocks", and "A-MPR" are not applicable as indicated as N/A. NS_27 is applied to all bands as indicated as "For all E-UTRA bands" in "E-UTRA Band." All bands indicate all bands used in the mobile communication system of the present embodiment, for example, all bands specified in Table 5.5-1 E-UTRA operating bands in Non-Patent Document 1. However, "all bands" is not limited thereto, and a smaller number of bands than all bands specified in Table 5.5-1 E-UTRA operating bands may be "all bands" or a larger number of bands than all bands specified in Table 5.5-1 E-UTRA operating bands may be "all bands."

Further, NS_27 is applied to all defined channel bandwidths as indicated as "1.4, 3, 5, 10, 15, 20" in "Channel bandwidth." All bands need not be necessarily included. For example, NS_27 may be applied to bands obtained by excluding some bands from all bands. Further, all channel bandwidths need not be necessarily included. For example, NS_27 may be applied to channel bandwidths obtained by excluding some channel bandwidths from all channel bandwidths. In the present embodiment, one signaling value (NS_27) is introduced as a signaling value for applying new P-max to the user equipment UE, but a plurality of signaling values may be introduced as a signaling value for applying new P-max to the user equipment UE.

In the present embodiment, the user equipment UE holds the NS values applicable by the user equipment UE in a storage unit such as a memory in advance for each band supported. Further, in the present embodiment, as described above, the base station eNB broadcasts an entry list including NS values and P-maxes for each band supported by the user equipment UE through the SIB1. As an example, the user equipment UE is assumed to be able to apply only NS_27 as a signaling value other than a default signaling value (NS_01) in a certain band to be applied. At this time, the base station eNB broadcasts a list including entries arranged in the descending order of priorities "(NS_10, P-maxA), (NS_27, P-maxB), (NS_27, P-maxB), (NS_30, P-maxC)" through an SIB1 message for a band supported by the user equipment UE.

The user equipment UE that has received the SIB1 message checks that information stored in the memory (information indicating that NS_27 is supported), selects NS_27 which is a NS value of a first entry applicable by the user equipment UE, and applies P-maxB corresponding to NS_27.

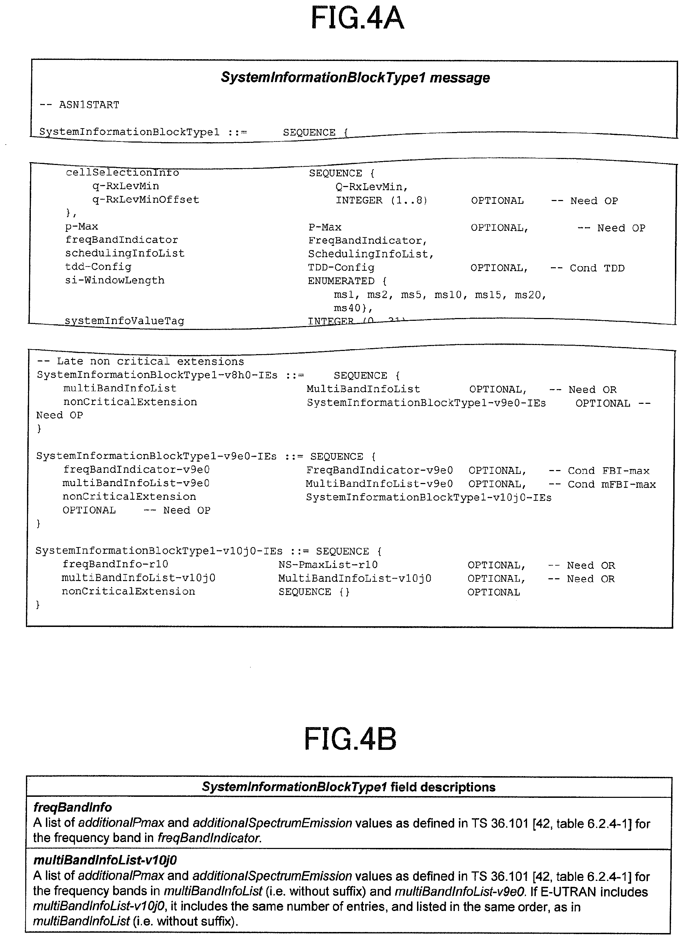

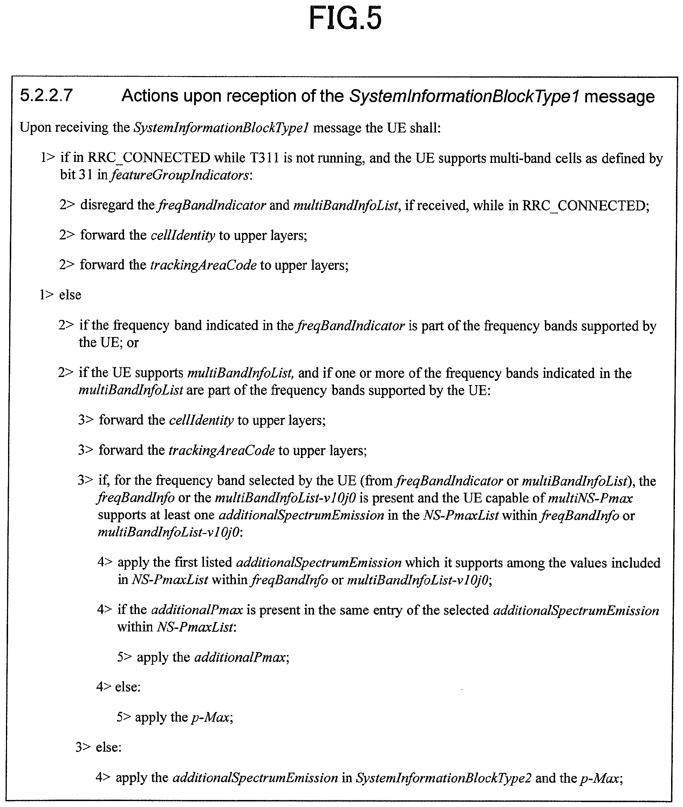

Figs. 4A, 4B and 5 illustrate a specification example to which the user equipment UE performing the above operation conforms. Figs. 4A, 4B show an excerpt from "SystemInformationBlockType 1 message" in Non-Patent Document 2. As illustrated in Fig. 4A, "freqBandInfo" and "multiBandInfoList-v10j0" are included as information elements. As illustrated in Fig. 4B, "freqBandInfo" is a list of "additionalPmax and additionalSpectrumEmission" corresponding to a band indicated by freqBandIndicator. AdditionalPmax indicates P-max described above. AdditionalSpectrumEmission indicates an NS value. The SIB1 includes "p-Max" in addition to additionalPmax. "p-Max" is applied to UE to which any additional Pmax is not applied.

"MultiBandInfoList-v10j0" includes a list of "additionalPmax and additionalSpectrumEmission" of each band in multiBandInfoList.

Fig. 5 is an excerpt from 5.2.2.7 in Non-Patent Document 2. As illustrated in Fig. 5, the user equipment UE that has received the SIB1 message selects additionalSpectrumEmission (NS value) which is first listed among values supported by the user equipments UE in a list (NS-PmaxList) of "additionalPmax and additionalSpectrumEmission" corresponding to a band applied by the user equipments UE, and applies additionalPmax(P-max) in the entry of the NS value.

Further, "freqBandInfo" and "multiBandInfoList-v10j0" are also included in a SIB3 and a SIB5 respectively by which information for cell reselection is broadcast.

### (Exemplary process sequence)

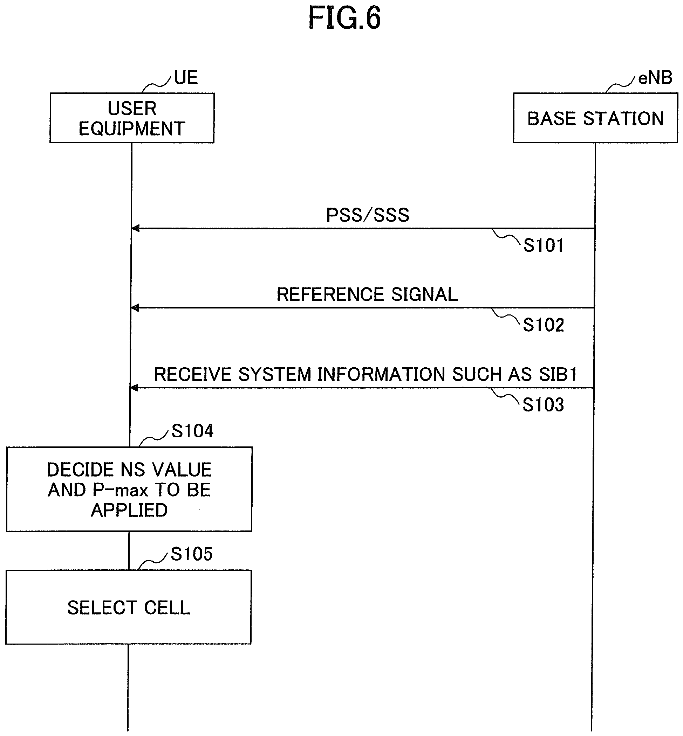

Next, as an example of a process sequence of the communication system according to the present embodiment, an example of an operation at the time of cell selection in an RRC idle state will be described with reference to a sequence diagram of Fig. 6. In the cell selection, measurement and determination of a reception quality (RSRQ) may be performed, but in this example, description will proceed focusing on measurement and determination of reception power (RSRP). The reception power is also referred to as a "reception level."

In the example illustrated in Fig. 6, the user equipment UE receives a synchronization signal (PSS/SSS) from the base station eNB through a cell search (step S101) and acquires a cell ID (PCI) while performing synchronization. For a cell synchronized through the synchronization signal, the user equipment UE receives a reference signal (CRS) transmitted from the base station eNB and measures the reception power (RSRP) (step S102). Here, the reception powers (RSRP) of a plurality of cells are assumed to be measured.

The user equipment UE selects a cell of the base station eNB (illustrated in Fig. 6) as a cell which is highest in the RSRP of the reference signal (best cell).

In step S103, the user equipment UE receives system information (the MIB, the SIB1, and the like) broadcast from the base station eNB. Here, the SIB1 includes "freqBandInfo" and "multiBandInfoList-v10j0" as illustrated in Figs. 4A, 4B and 5.

In step S104, the user equipment UE selects an NS value in a band applied by the user equipment UE and selects P-max corresponding to the NS value. As an example, as described above, NS_27 and P-maxB corresponding thereto are selected.

The user equipment UE determines a DL channel bandwidth to be applied in the cell by the user equipment UE according to a DL bandwidth information included in the MIB. Further, the user equipment UE determines a band (operating band) to be applied in the cell by the user equipment UE based on band information included in the SIB1. An UL channel bandwidth is assumed to be the same as the DL channel bandwidth unless the UL bandwidth information is included in the SIB2. In the case where the UL bandwidth information is included in the SIB2, a value broadcast through the SIB2 is decided to be the UL channel bandwidth to be applied in the cell.

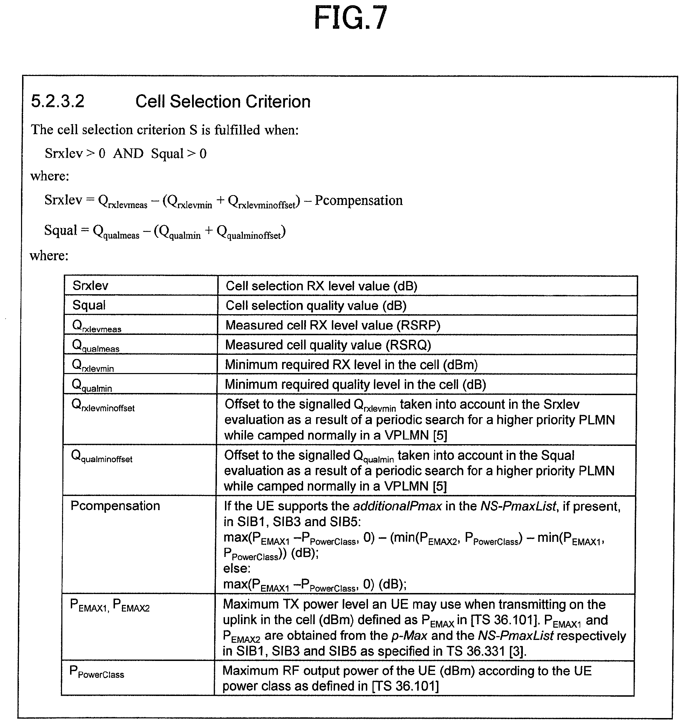

In step S105, it is determined whether the cell satisfies a condition "cell selection criterion S." Specifically, as an example, the user equipment UE of the present embodiment determines whether or not the "cell selection criterion S" is satisfied using a method described in 5.2.3.2 in Non-Patent Document 4. Fig. 7 illustrates an excerpt of 5.2.3.2 in Non-Patent Document 4. As illustrated in Fig. 7, the user equipment UE performs determination of at least "Srxlev >0." Srxlev is "Qᵣₓₗₑᵥₘₑₐₛ - (Qᵣₓₗₑᵥₘᵢₙ + Q_{rxlevminoffset}) - Pcompensation." Here, the user equipment uses P-max (for example, P-max B) to calculate Pcompensation. Specifically, Pcompensation is calculated by "max (P_{EMAX1} - P_{PowerClass}, 0) - (min (P_{EMAX2}, P_{PowerClass})-min(P_{EMAX1}, P_{PowerClass}))." Here, P_{EMAX1} is "p-Max" in the SIB1 (a value which is not associated with an NS value in the list), and P_{EMAX2} is "additionalPmax" obtained from NS-PmaxList (for example, P-maxB corresponding to NS_27). When the condition such as "cell selection criterion S" is confirmed to be satisfied in the cell, the user equipment UE decides to reside in the cell.

The above example is an example in which the cell selection is performed, but even in cell reselection performed when the user equipment UE transitions from a certain cell to another cell, there is a "cell selection criterion S" similar to that at the time of the cell selection as one of conditions when a cell (of a transition destination) to reside is selected. In other words, it is necessary to satisfy at least Srxlev > 0 in a cell (a target cell) to which it desires to transition. Therefore, similarly to the case of the cell selection, the user equipment UE also performs a calculation of "Qᵣₓᵢₗₑᵥₘₑₐₛ - (Qᵣₓₗₑᵥₘᵢₙ + Q_{rxlevminoffset}) - Pcompensation" even in the cell reselection.

The cell reselection is divided into intra-frequency cell reselection and inter-frequency cell reselection.

In the intra-frequency cell reselection, when the reception power of the reference signal in the serving cell is equal to or less than a predetermined value, the user equipment UE starts measurement of the reception power in neighboring cells having the same frequency as the frequency of the cell (which is also referred to as a "carrier frequency"), and decides a neighboring cell to which it transitions based on a measurement result. In the intra-frequency cell reselection, information included in the SIB3 (System Information Block Type 3) which is one of a plurality of types of system information transmitted from the base station eNB to the user equipment UE is used.

In other words, in the intra-frequency cell reselection, when Pcompensation is calculated the user equipment UE uses "p-Max" in the SIB3 as P_{EMAX1} and uses "additionalPmax" obtained from NS-PmaxList in the SIB3 as P_{EMAX2}.

On the other hand, in the inter-frequency cell reselection, the user equipment UE measures neighboring cells having frequencies different from the frequency of the cell in which it resides based on a priority or the like, and decides a neighboring cell to which it transitions based on a measurement result. In the inter-frequency cell reselection, information included in the SIB5 (System information Block Type 5) is used.

In other words, in the inter-frequency cell reselection, when Pcompensation is calculated, the user equipment UE uses "p-Max" corresponding to a transition target frequency in the SIB5 as P_{EMAX1}, and uses "additionalPmax" obtained from NS-PmaxList corresponding to a transition target frequency in the SIB5 as the P_{EMAX2}.

### (Modified example)

Next, a modified example will be described. The modified example is based on the embodiments described above and will mainly focus on portions different from the embodiments described so far.

The "user excipient UE flying in the air" exemplified in the "Problem to be Solved by the Invention" is, for example, a drone. The user equipment UE (eg, communication module, smartphone, etc.) installed in the drone is not always in the air but may be on the ground (including low sky) in some cases. In the case of using the user equipment UE on the ground, it is desirable that the same maximum transmission power as that of the user equipment UE such as a general smartphone or the like is applied and that only when the user equipment UE flies over the sky, the maximum transmission power is set to be lower in order to suppress interference.

For example, a low P-max (e.g. 20 dBm) is applied only when the user equipment UE is in the sky, and when using the user equipment UE on the ground, it is desirable to apply the same P-max (e.g. 23 dBm) as P-max used in a general user equipment UE (such as a smartphone). In the modified example, it is possible to apply such P-max.

### <Modification Example: Operation Outline>

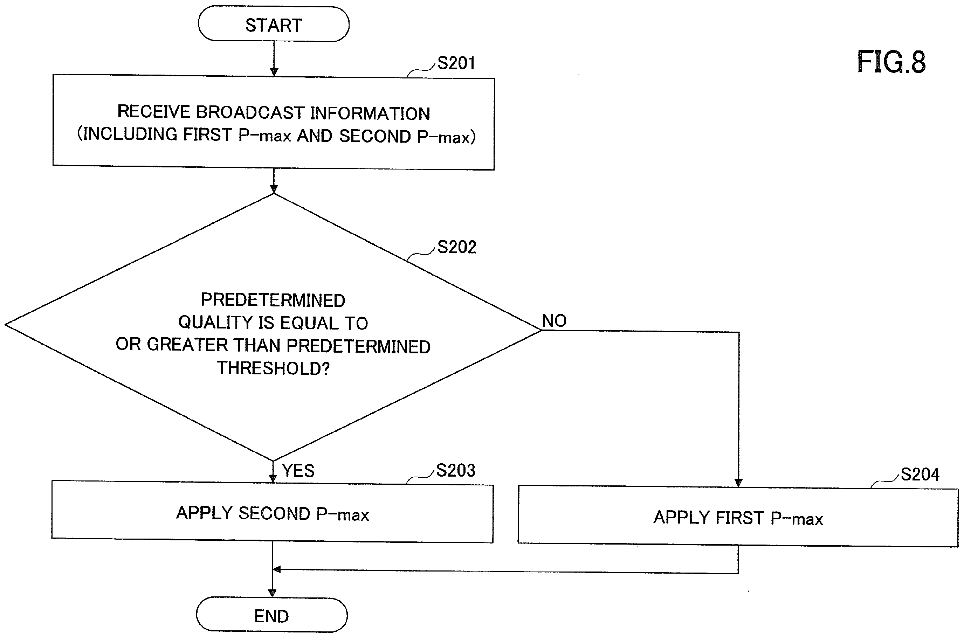

The outline of the operation of the user equipment UE in the modified example will be described with reference to the flowchart of FIG.8.

The base station eNB transmits broadcast information (e.g. SIB1) including a first P-max and a second P-max, the user equipment UE receives the broadcast information, and holds the first P-max and the second P-max (step S201).

The first P-max is, for example, the "p-Max" described above (a value applied to a UE to which no additionalPmax is applied). The second P-max is, for example, "additionalPmax" or P-max newly introduced in the modified example. In this modified example, the second P-max is smaller than the first P-max. However, it is not limited that the second P-max is smaller than the first P-max, the second P-max may be equal to the first P-max, or the second P- max may be greater than the first P-max.

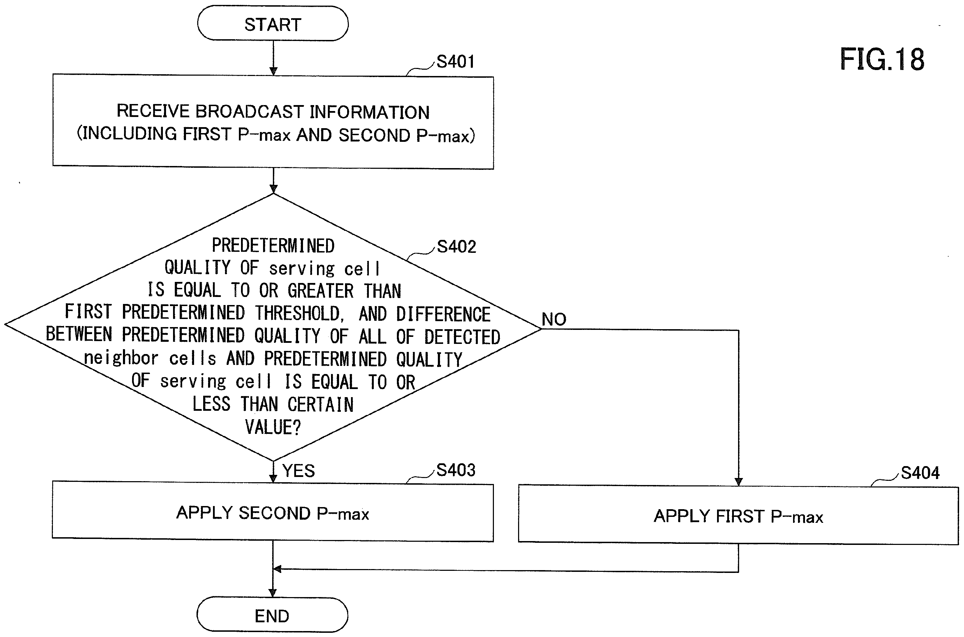

Then, the user equipment UE measures a predetermined quality of a signal of DL (direction from the base station eNB to the user equipment UE) in the target cell (serving cell), and determines whether or not the predetermined quality is equal to or larger than a predetermined threshold value (Step S202). The phrase "the predetermined quality is equal to or larger than a predetermined threshold value" may be rephrased with "the predetermined quality is larger than a predetermined threshold value". Same applies to the after-mentioned examples of Fig.18 and Fig. 18. In this modified example, the predetermined quality is, for example, RSRP, RSRQ, or RS-SINR. Note that the predetermined quality may be pathloss of DL. When using pathloss as the predetermined quality, "the predetermined quality is equal to or larger than a predetermined threshold value" ("the predetermined quality is larger than a predetermined threshold value") is replaced with "the predetermined quality is equal to or smaller than a predetermined threshold value" ("the predetermined quality is smaller than a predetermined threshold value").

When the determination result in step S202 is Yes (the predetermined quality is equal to or larger than the predetermined threshold value), the user equipment UE controls the transmission power by applying the second P-max (step S203). When the determination result in step S202 is No (the predetermined quality is not equal to or larger than the predetermined threshold value), the user equipment UE controls the transmission power by applying the first P-max (step S204).

When the user equipment UE is in the sky, it is generally considered that the visibility is good and the predetermined quality is improved. Therefore, according to the operation of this modified example, it is possible to apply a low P-max when the user equipment UE exists in the sky. When the altitude of the user equipment UE becomes extremely high, the predetermined quality such as RSRP becomes lower than the predetermined threshold, and the first P-max is applied. In the case where the altitude of the user equipment UE becomes very high, the influence of interference due to the UL transmission of the user equipment UE becomes small, so the first P-max may be applied.

Hereinafter, a first example and a second example will be described as more concrete examples in the modified example.

### <Modification Example: First Example>

In the first example, the above-described second P-max is set to additionalPmax described above. For example, when the user equipment UE applies NS_27, P-max corresponding to NS_27 is applied as the second P-max.

Further, in the cell selection and the cell reselection described with reference to FIG. 7, the user equipment UE usees the second P-max as P_{EMAX2} when the predetermined quality in the target cell (neighbor cell) is equal to or greater than a predetermined threshold (an example in which second P-max is applied), to calculate Pcompensation as "max(P_{EMAX1} -P_{PowerClass}, 0) - (min(P_{EMAX2}, P_{PowerClass}) - min(P_{EMAX1}, P_{PowerClass}))".

Further, the user equipment UE does not apply P_{EMAX2} when the predetermined quality in the target cell is not equal to or greater than the predetermined threshold (an example in the case where the first P-max is applied), and calculates Pcompensation as "max (P_{EMAX1} -P_{PowerClass}, 0)". P_{EMAX1} is the first P-max.

The user equipment UE calculates the Power Head Room using the second P-max when the predetermined quality in the target cell is equal to or larger than the predetermined threshold value (an example in the case where the second P-max is applied), and when the predetermined quality in the target cell is not equal to or larger than the predetermined threshold value (an example in the case where the first P-max is applied), the user equipment UE calculates the Power Head Room using the first P-max.

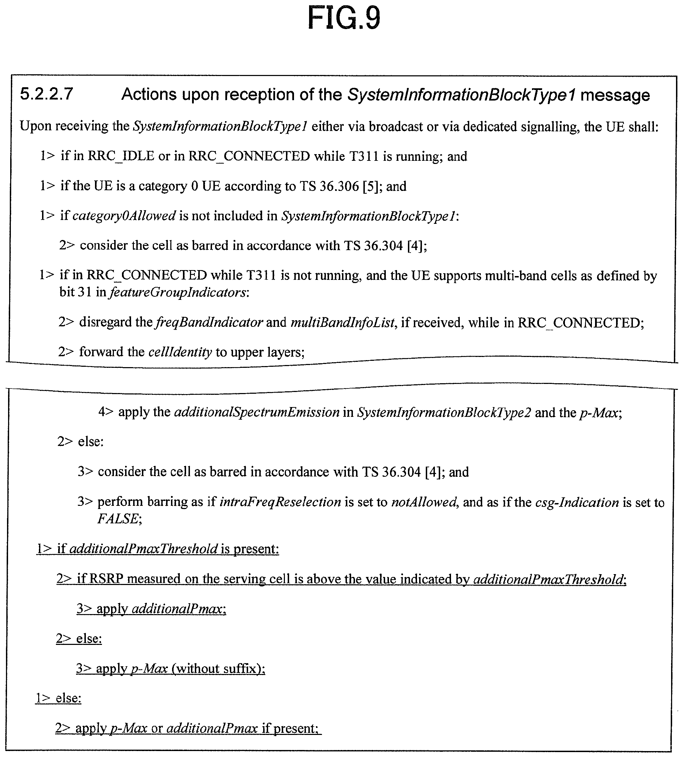

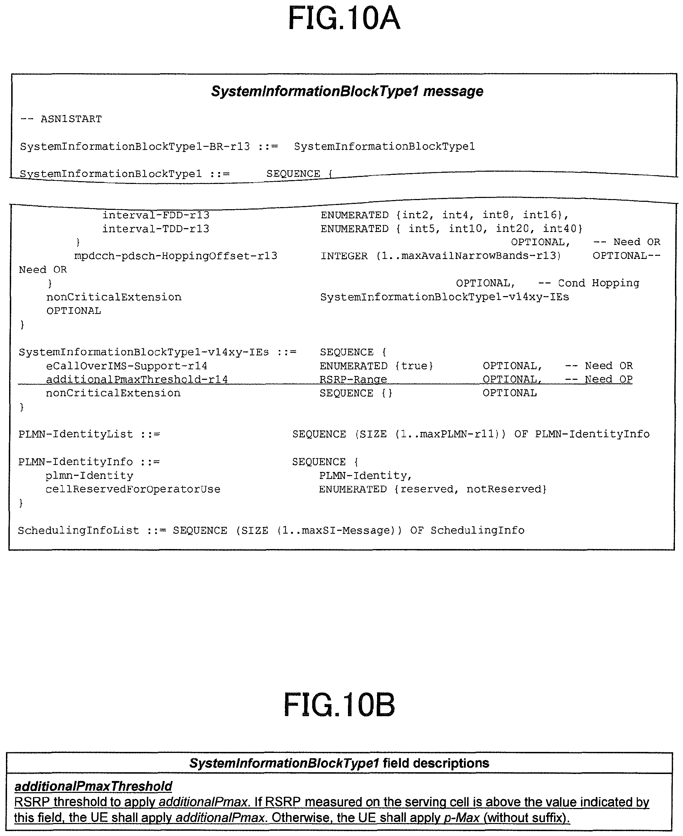

FIG. 9 shows an example of specification change concerning the operation at the time of SIB1 reception in the first example of the modification example. FIG. 9 shows a modified example from "5.2.2.7 Actions upon reception of the SystemInformationBlockType 1 message" (excerpt) in Non-Patent Document 2, and the changed portion is underlined. RSRP is used as an example of the predetermined quality in FIG. 9 and specification change examples described below. As shown in FIG. 9, if a predetermined threshold (additionalPmaxThreshold) exists and the predetermined quality (RSRP) at the serving cell is larger than the value indicated by additionalPmaxThreshold, additionalPmax is applied, and if the predetermined quality (RSRP) is not larger than the value indicated by additionalPmaxThreshold, p-Max is applied. Figs. 10A and 10B show modified examples of contents of SIB1. As shown in Figs. 10A and 10B, additionalPmaxThreshold is added.

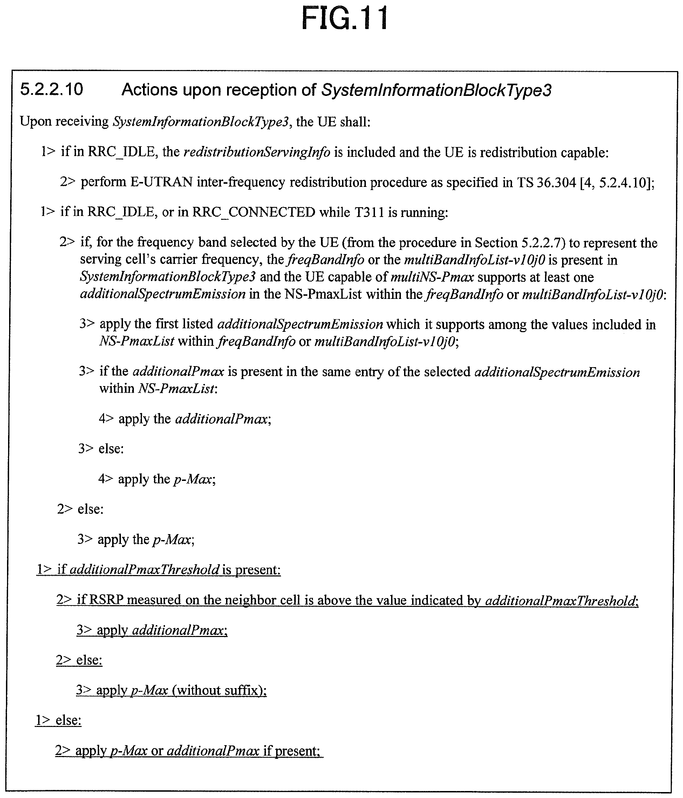

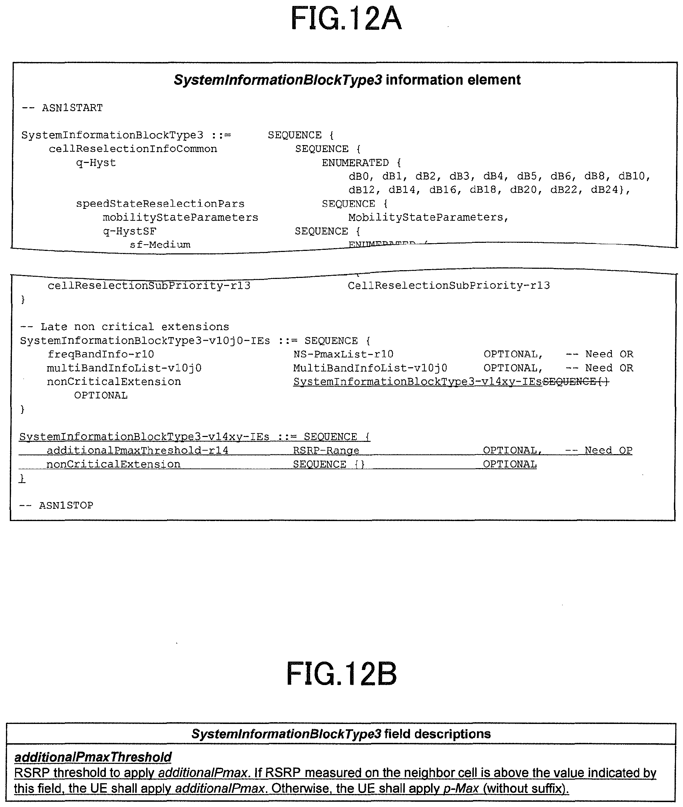

FIG. 11 shows an example of a specification change concerning the operation at the time of SIB3 reception in the first example of the modified example. FIG. 11 shows a modified example from "5.2.2.10 Actions upon reception of the SystemInformationBlockType 3" (excerpt) in Non-Patent Document 2, and the changed portion is underlined. As shown in FIG. 11, when a predetermined threshold (additionalPmaxThreshold) exists, if the predetermined quality (RSRP) in the neighbor cell is larger than the value indicated by additionalPmaxThreshold, additionalPmax is applied, and if the predetermined quality (RSRP) is not larger than the value indicated by additionalPmaxThreshold, p-Max is applied. Figs. 12A and 12B show change examples of contents of SIB3. As shown in Figs. 12A and 12B, additionalPmaxThreshold is added.

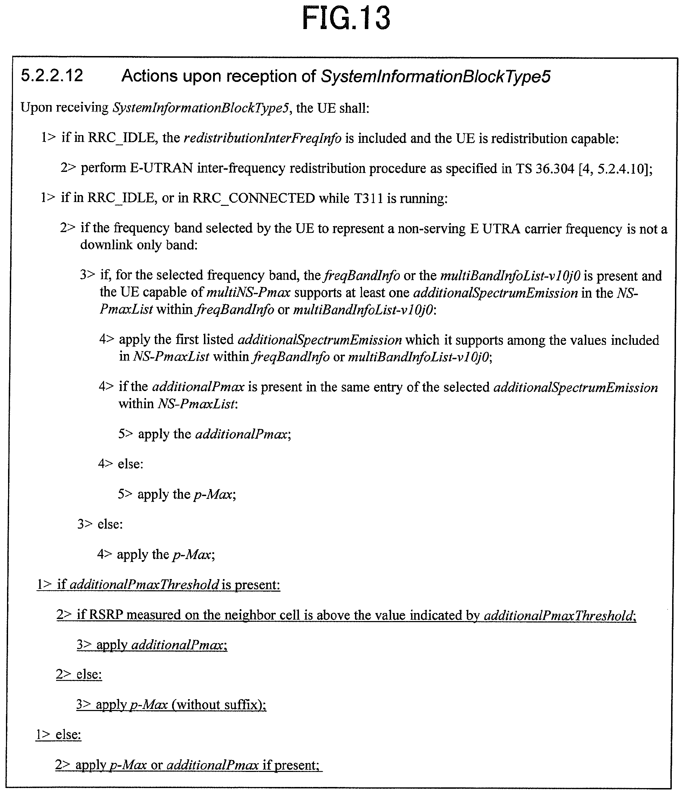

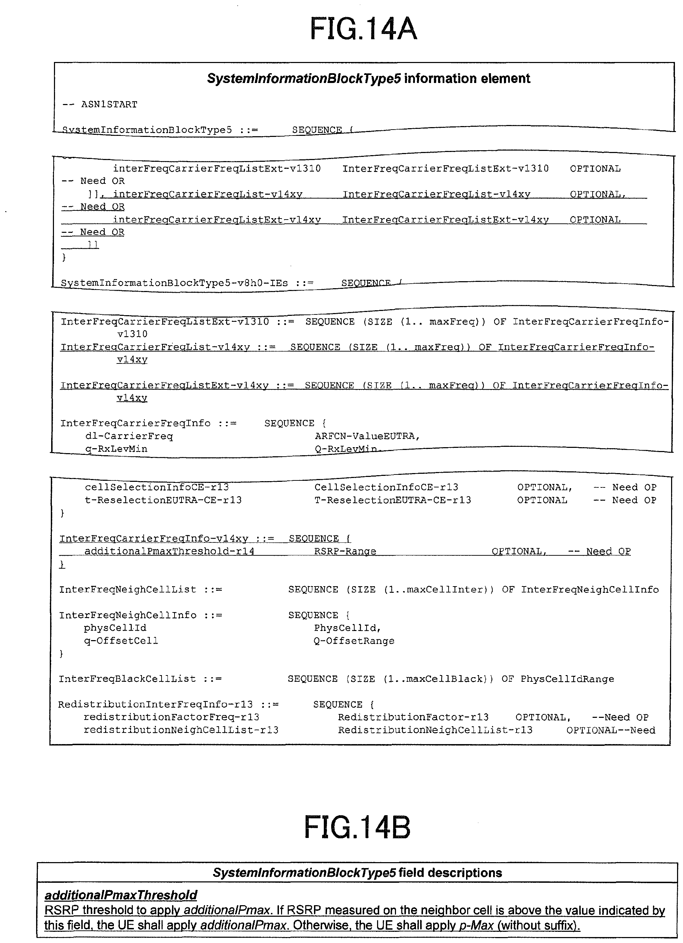

FIG. 13 shows an example of specification change concerning the operation at the time of reception of SIB5 in the first example of the modified example. FIG. 13 shows a modification example from "5.2.2.12 Actions upon reception of the SystemInformationBlockType 5" (excerpt) in Non-Patent Document 2, and the modified portion is underlined. As shown in FIG. 13, if a predetermined threshold (additionalPmaxThreshold) exists and the predetermined quality (RSRP) in the neighbor cell is larger than the value indicated by additionalPmaxThreshold, additionalPmax is applied, and if the predetermined quality (RSRP) is not larger than the value indicated by additionalPmaxThreshold, p-Max is applied. Figs. 14A and 14B show modification examples of contents of SIB5. As shown in FIGS. 14A and 14B, additionalPmaxThreshold is added.

### <Modified Example: Second Example>

In the second example, a second P-max is provided separately from the scheme of the multiple NS values / multiple P-maxes described with reference to FIG. 5 and the like. That is, in the case where the predetermined quality is equal to or larger than the predetermined threshold value, the user equipment UE applies the second P-max notified to the user equipment UE separately from the additional Pmax.

Regarding cell selection and cell reselection in the second example, Pcompensation is calculated as shown in FIG. 7 regardless of whether or not the second P-max is applied, for example, that is, regardless of whether or not the predetermined quality in the target cell (adjacent cell) is equal to or larger than the predetermined threshold value. Also, regardless of whether or not the second P-max is applied, the user equipment UE may calculate Pcompensation using the first P-max or addtionalPmax as "max(P_{EMAX1} -P_{PowerClass}, 0) - (min(P_{EMAX2}, P_{PowerClass}) - min(P_{EMAX1}, P_{PowerClass}))".

In addition, the user equipment UE calculates the Power Head Room using the first P-max or addtionalPmax regardless of whether the predetermined quality in the target cell is equal to or larger than the predetermined threshold.

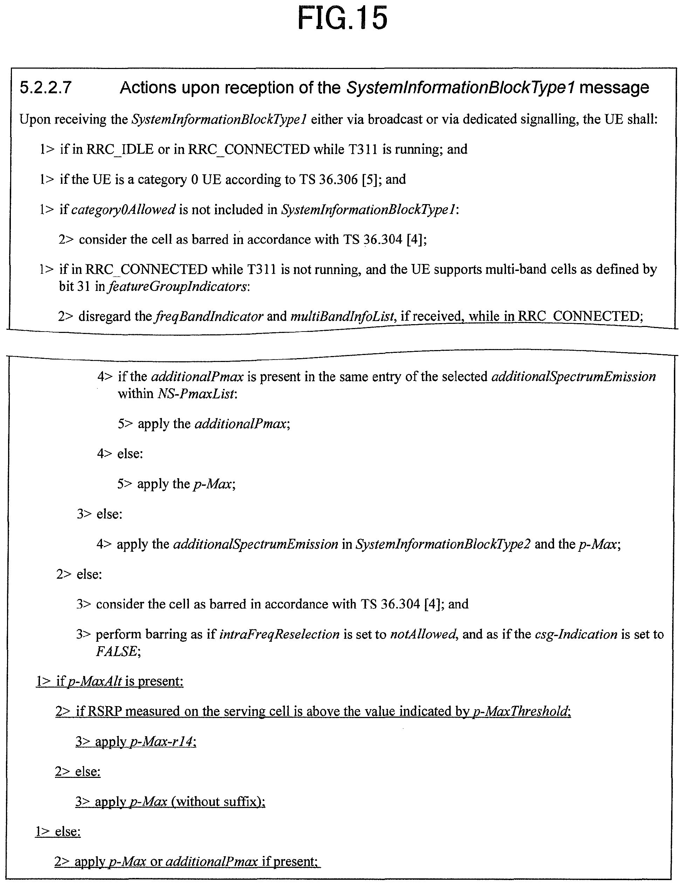

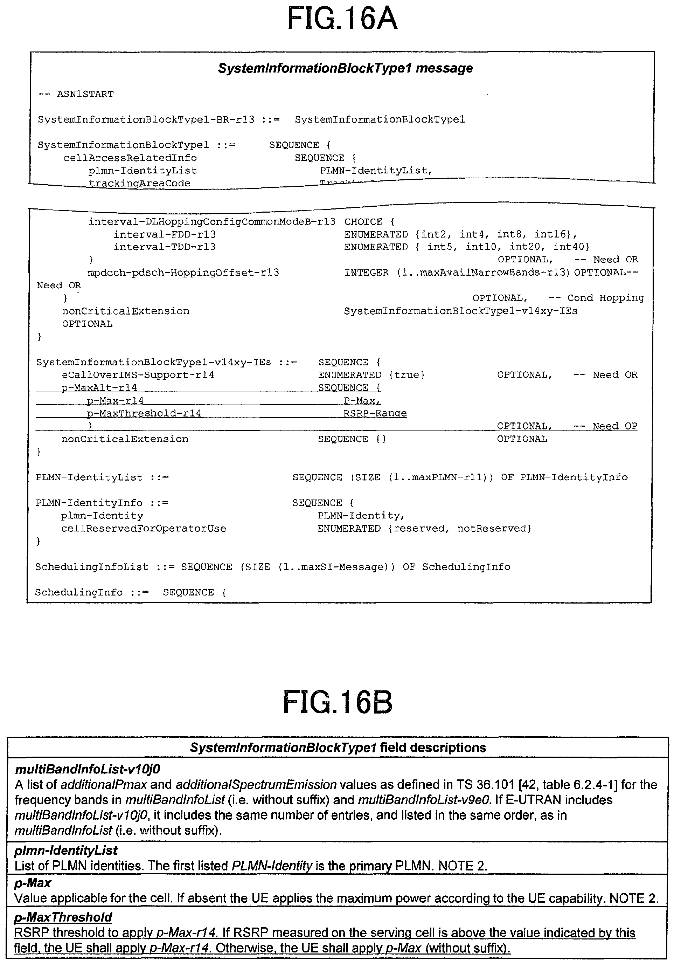

FIG. 15 shows an example of specification change concerning the operation at the time of SIB1 reception in the second example of the modified example. FIG. 15 shows a change example from "5.2.2.7 Actions upon reception of the SystemInformationBlockType 1 message" (excerpt) in Non-Patent Document 2, and the changed portion is underlined. As shown in FIG. 15, when the notification information (p-MaxAlt) corresponding to the second P-max exists, if the predetermined quality (RSRP) at the serving cell is greater than the value indicated by p-MaxThreshold, the user equipment applies p-Max-r14 (second P-max), and if the predetermined quality (RSRP) at the serving cell is not greater than the value indicated by p-MaxThreshold, the user equipment UE applies p-Max (first P-max). Figs. 16A and 16B show modification examples of the contents of SIB1. As shown in FIGS. 16A and 16B, p-MaxAlt, p-Max-r 14, and p-MaxThreshold are added.

### <Modified Example: Another Example of Application Decision Method of First P-max / Second P-max>

In addition to the method described with reference to FIG. 8, a method described below may be used for determining which of the first P-max and the second P-max is to be applied. In the following, application determination method examples 1 to 4 will be described as additional application determination methods in the modified example. In the method described below, it is judged which one of the first P-max and the second P-max to apply in consideration not only of the quality of the serving cell but also the quality of the neighbor cell. The examples of the first P-max and the second P-max, the usage method and the like are as described above.

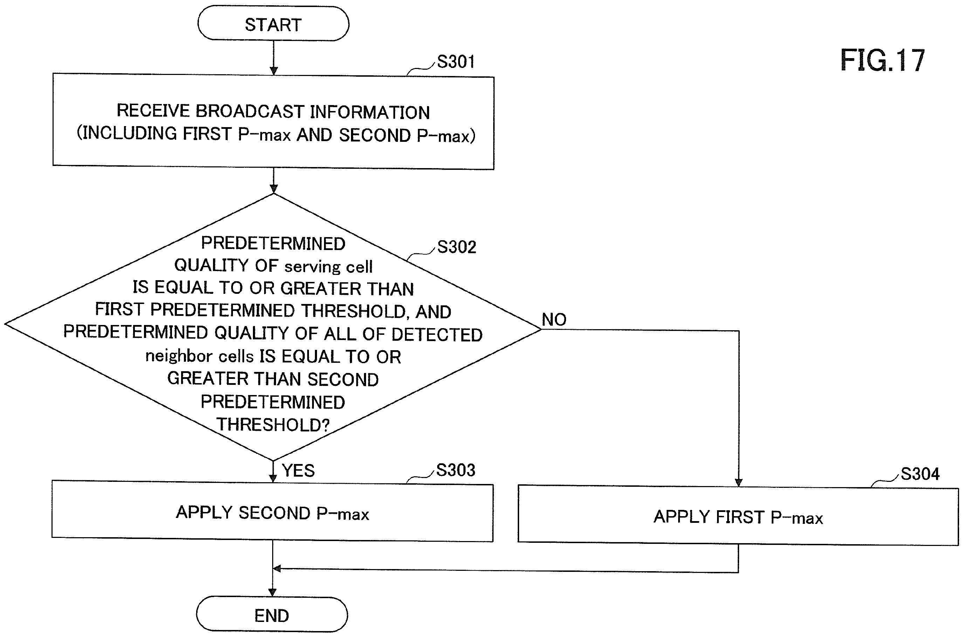

FIG. 17 shows an application determination method example 1. The base station eNB transmits broadcast information (e.g. SIB1) including the first P-max and the second P-max, the user equipment UE receives the broadcast information, and holds the first P-max and the 2 of P-max (step S301).

Then, the user equipment UE measures predetermined quality of a signal of DL (direction from the base station eNB to the user equipment UE) in the serving cell, and measures the predetermined quality of the signals of all detected neighbor cells, and determines whether "the predetermined quality of the serving cell is equal to or larger than the first threshold and the predetermined quality of all the detected neighbor cells is equal to or larger than the second threshold" (step S302). As already explained, the predetermined quality is, for example, RSRP, RSRQ, or RS-SINR. Also, the first threshold value and the second threshold value may be the same value or different values. Further, "all the detected neighbor cells" in the above condition may be replaced with "at least one detected neighbor cell", "a part of the detected neighbor cells in all the detected neighbor cells " or the like.

If the determination result in step S 302 is Yes, the user equipment UE controls the transmission power by applying the second P-max (step S303). If the determination result in step S 302 is No, the user equipment UE controls the transmission power by applying the first P-max (step S304).

FIG. 18 shows an application determination method example 2. The base station eNB transmits broadcast information (e.g. SIB 1) including the first P-max and the second P-max, the user equipment UE receives the broadcast information, and holds the first P-max and the second P-max (step S 401).

Then, the user equipment UE measures predetermined quality of a signal of DL (direction from the base station eNB to the user equipment UE) in the serving cell, and measures predetermined quality of the signals of all the detected neighbor cells, and determines whether "the predetermined quality of the serving cell is equal to or larger than the first threshold value and the difference between the predetermined quality of all the detected neighbor cells and the predetermined quality of the serving cell is equal to or less than a certain value " (Step S 402). As already explained, the predetermined quality is, for example, RSRP, RSRQ, or RS-SINR. Also, "equal to or less than" may be replaced with "less than". "A certain value" is, for example, 3 dB. Further, "all the detected neighbor cells" in the above condition may be replaced with "at least one detected neighbor cell", "a part of the detected neighbor cells in all the detected neighbor cells " or the like. In the modified example, the "difference between the predetermined quality of the neighbor cell and the predetermined quality of the serving cell" is a value obtained by subtracting the predetermined quality of the serving cell from the predetermined quality of the neighbor cell. However, it is not limited to this.

If the determination result in step S402 is Yes, the user equipment UE controls the transmission power by applying the second P-max (step S403). If the determination result in step S402 is No, the user equipment UE controls the transmission power by applying the first P-max (step S404).

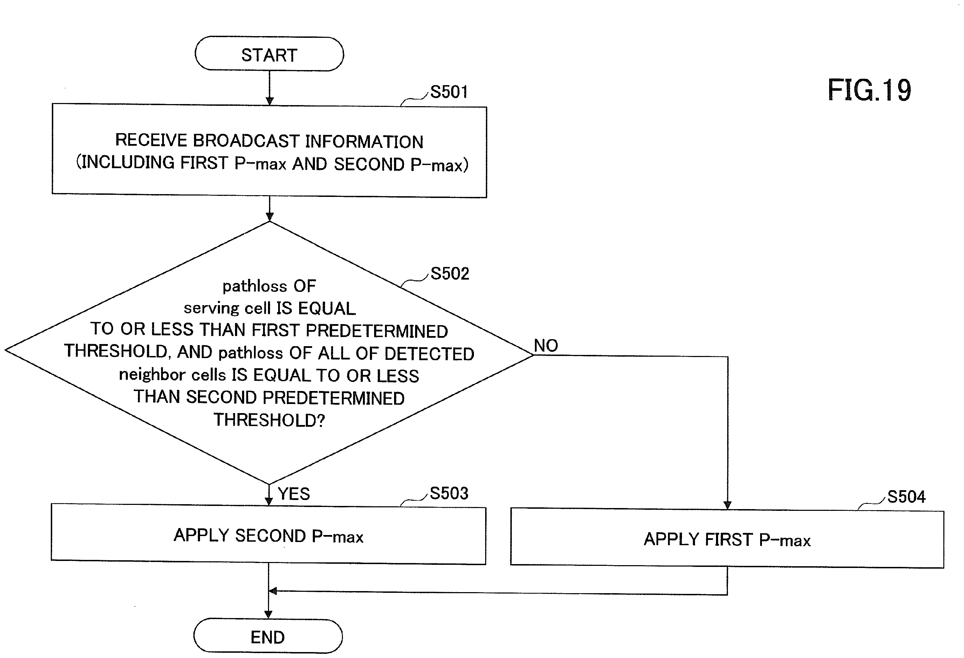

FIG. 19 shows an application determination method example 3. The base station eNB transmits broadcast information (e.g. SIB1) including the first P-max and the second P-max, the user equipment UE receives the broadcast information, and holds the first P-max and the second P-max (step S501).

Then, the user equipment UE measures pathloss of DL (the direction from the base station eNB to the user equipment UE) in the serving cell, measures the pathloss of DL of all the detected neighbor cells, and determines whether "pathloss of the serving cell is equal to or less than the first threshold value and pathloss of all detected neighbor cells is equal to or less than the second threshold value" (step S502). The first threshold value and the second threshold value may be the same value or different values. Also, "equal to or less than" may be replaced with "less than". Note that pathloss is an example of the predetermined quality. Further, "all the detected neighbor cells" in the above conditions may be replaced with "at least one detected neighbor cell", "a part of the detected neighbor cells in all the detected neighbor cells " or the like.

If the determination result in step S502 is Yes, the user equipment UE controls the transmission power by applying the second P-max (step S503). If the determination result in step S502 is No, the user equipment UE controls the transmission power by applying the first P-max (step S504).

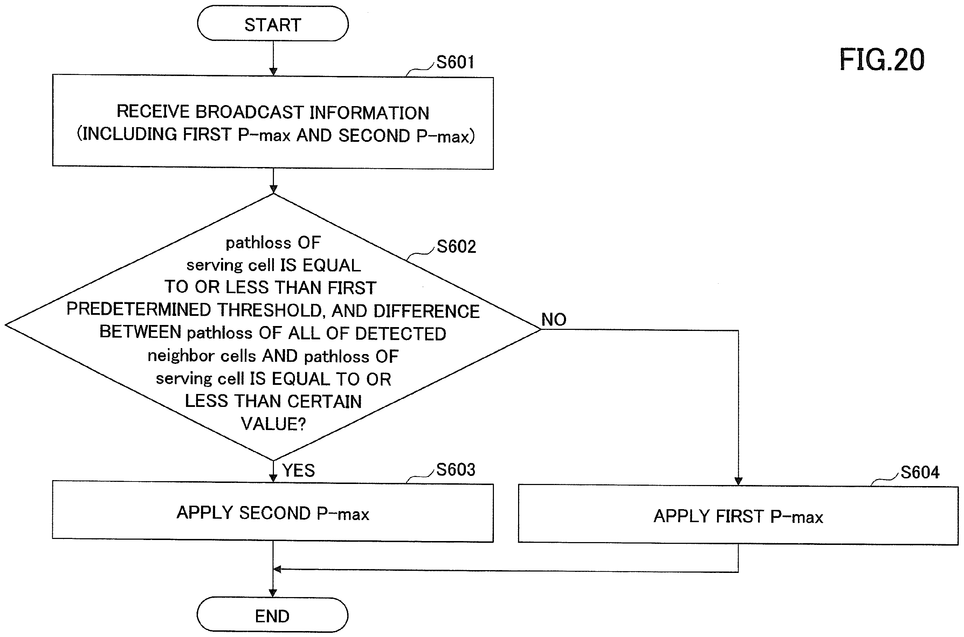

FIG. 20 shows an application determination method example 4. The base station eNB transmits broadcast information (e.g. SIB1) including the first P-max and the second P-max, the user equipment UE receives the broadcast information, and holds the first P-max and the second of P-max (step S601).

Then, the user equipment UE measures pathloss of DL (the direction from the base station eNB to the user equipment UE) in the serving cell, measures pathloss of DL of all the detected neighbor cells, and determines whether "the pathloss of the serving cell is equal to or less than the first threshold value and the difference between the pathloss of all the detected neighbor cells and the pathloss of the serving cell is equal to or less than a certain value" (Step S602). "equal to or less than" may be replaced with "less than". "A certain value" is, for example, 3 dB. Further, "all the detected neighbor cells" in the above conditions may be replaced with "at least one detected neighbor cell", "a part of the detected neighbor cells in all the detected neighbor cells " or the like. In this modified, the "difference between the pathloss of the neighbor cell and the pathloss of the serving cell" is the value obtained by subtracting the pathloss of the serving cell from the pathloss of the neighbor cell. However, it is not limited to this.

If the determination result in step S602 is Yes, the user equipment UE controls the transmission power by applying the second P-max (step S603). If the determination result in step S602 is No, the user equipment UE controls the transmission power by applying the first P-max (step S604).

With the configuration of the modified example described above, for example, a control can be realized in which the second P-max is applied only when the drone equipped with the user equipment UE is in the sky (when the interference becomes conspicuous) to reduce the maximum transmission power, and when the drone is on the ground, the maximum transmission power for the conventional mobile terminal (e.g. smartphone) is applied.

### (Apparatus configuration)

Next, a configuration example of a user equipment UE and a base station eNB in an embodiment (including the modified example) of the present invention will be described.

### <User equipment UE>

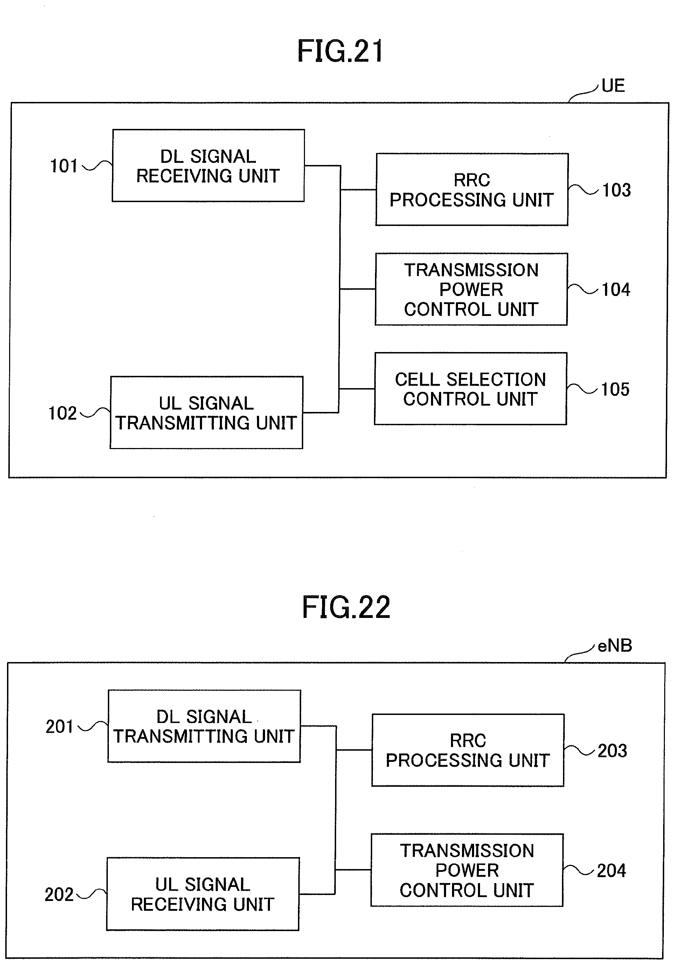

Fig. 21 illustrates a functional configuration diagram of the user equipment UE. As illustrated in Fig. 21, the user equipment UE includes a DL signal receiving unit 101, an UL signal transmitting unit 102, an RRC processing unit 103, a transmission power control unit 104, and a cell selection control unit 105. Fig. 21 illustrates only functional units of the user equipment UE particularly related to the embodiment of the present invention, and the user equipment UE also has functions (not illustrated) of performing at least operations conforming to LTE.

The DL signal receiving unit 101 has a function of receiving various kinds of downlink signals from the base station eNB and acquiring information of a higher layer from received signals of the physical layer, and the UL signal transmitting unit 102 has a function of generating various kinds of signals of the physical layer from information of the higher layer to be transmitted from the user equipment UE and transmitting the generated signals to the base station eNB. Also, the DL signal receiving unit 101 includes a function of measuring predetermined quality (eg, RSRP, RSRQ, RS-SINR, pathloss) of the DL of the serving cell and the neighbor cell.

The RRC processing unit 103 performs reception and reading of the system information (broadcast information) including the SIB1, the SIB3, or the SIB5 described in the present embodiment, and performs the process of selecting the NS value and selecting P-max and the like. The RRC processing unit 103 includes a storage unit and retains applicable NS values in advance. For example, the RRC processing unit 103 compares the retained NS value with the NS value received through the SIB1 or the like, and determines whether the user equipment UE supports the NS value received through the SIB1 or the like.

The transmission power control unit 104 controls the transmission power based on the applicable NS value decided by the RRC processing unit 103 and a corresponding maximum transmission power value (P-max). For example, the control of the transmission power includes decision of transmission power that does not exceed the maximum transmission power value (P-max) when the signal is transmitted. The transmission power control unit 104 may include a function of measuring a predetermined quality of DL.

The cell selection control unit 105 has a function of performing the cell selection and the cell reselection. In other words, the cell selection control unit 105 determines whether or not at least the "cell selection criterion S" is satisfied using the maximum transmission power value corresponding to the selected NS value, and performs the cell selection or the cell reselection.

For example, the DL signal receiving unit 101 receives a predetermined signaling value which is a signaling value other than a default signaling value and a maximum transmission power value associated with the predetermined signaling value from the base station; and the transmission power control unit 104 measures a predetermined quality in downlink and controls transmission power by applying the maximum transmission power value corresponding to the predetermined signaling value when the predetermined quality is greater than a predetermined threshold.

Also, for example, the DL signal receiving unit 101 receives a first maximum transmission power value and a second maximum transmission power value from the base station; and the transmission power control unit 104 measures a predetermined quality in downlink and controls transmission power by applying the second maximum transmission power value when the predetermined quality is greater than a predetermined threshold, and controls transmission power by applying the first maximum transmission power value when the predetermined quality is not greater than the predetermined threshold.

The entire configuration of the user equipment UE illustrated in Fig. 21 may be implemented by a hardware circuit (for example, one or more IC chips), or a part of the configuration of the user equipment UE may be implemented by a hardware circuit, and the remaining parts may be implemented by a CPU, a memory, and a program.

### <Base station eNB>

Fig. 22 illustrates a functional configuration diagram of the base station eNB. As illustrated in Fig. 22, the base station eNB includes a DL signal transmitting unit 201, an UL signal receiving unit 202, an RRC processing unit 203, and a transmission power control unit 204. Fig. 22 illustrates only functional units of the base station eNB particularly related to the embodiment of the present invention, and the base station eNB has a function (not illustrated) of performing at least operations conforming to the LTE scheme.

The DL signal transmitting unit 201 has a function of generating various kinds of signals of the physical layer from information of the higher layer to be transmitted from the base station eNB and transmitting the signals. The UL signal receiving unit 202 has a function of receiving various kinds of uplink signals from the user equipment UE and acquiring information of the higher layer from the received signals of the physical layer.

The RRC processing unit 203 generates the system information such as the SIB1, the SIB3, or the SIB5 described in the present embodiment, and transmits the system information through the DL signal transmitting unit 201. For example, the transmission power control unit 204 performs, for example, scheduling for the user equipment UE while taking the maximum transmission power of the user equipment UE into consideration.

The entire configuration of the base station eNB illustrated in Fig. 22 may be implemented by a hardware circuit (for example, one or more IC chips), or a part of the configuration of the base station eNB may be implemented by a hardware circuit, and the remaining parts may be implemented by a CPU, a memory, and a program.

### <Hardware configuration>

The above block diagrams (Figs. 21 and 22) illustrate the blocks of the functional units. The functional blocks (constituent parts) are implemented by an arbitrary combination of hardware and/or software. A device of implementing each functional block is not particularly limited. In other words, each functional block may be implemented by one device which is physically and/or logically combined or may be implemented by a plurality of devices, that is, two or more devices which are physically and/or logically separated and are directly and/or indirectly connected (for example, a wired and/or wireless manner).

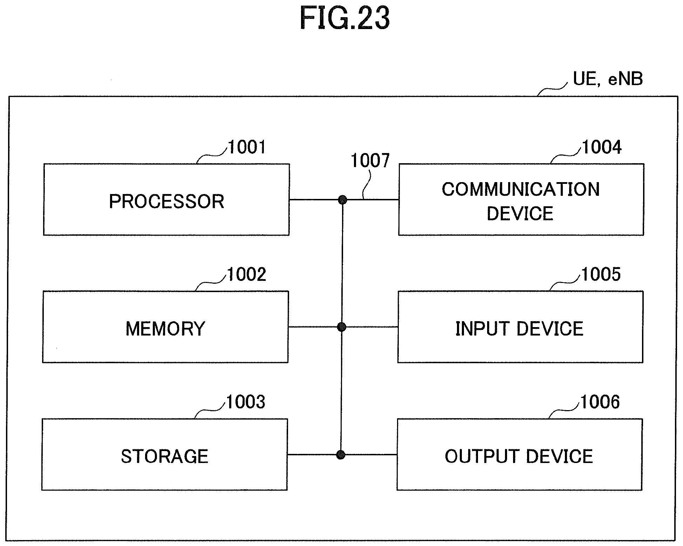

For example, each of the base station eNB and the user equipment UE according to one embodiment of the embodiment of the present invention may function as a computer that performs the process according to the present embodiment. Fig. 23 is a diagram illustrating an example of a hardware configuration of each of the base station eNB and the user equipment UE according to one embodiment of the embodiment of the present invention. Since the base station eNB and the user equipment UE have the same hardware configuration, the hardware configurations are illustrated in one drawing (Fig. 23).

As illustrated in Fig. 23, each of the base station eNB and the user equipment UE may physically be configured as a computer device that includes a processor 1001, a memory 1002, a storage 1003, a communication device 1004, an input device 1005, an output device 1006, a bus 1007, and the like.

In the following description, the term "device" can be replaced with a circuit, a device, a unit, or the like. The hardware configuration of each of the base station eNB and the user equipment UE may be configured to include one or more devices (units) illustrated in the drawing or may be configured without including some devices.

Each function in each of the base station eNB and the user equipment UE is implemented such that predetermined software (program) is read on hardware such as the processor 1001 and the memory 1002, and the processor 1001 performs an operation and controls communication by the communication device 1004 and reading and/or writing of data in the memory 1002 and the storage 1003.

For example, the processor 1001 operates an operating system and controls the entire computer. The processor 1001 may be constituted by a central processing unit (CPU: Central Processing Unit) including an interface with a peripheral device, a control device, an operation device, a register and the like.

Further, the processor 1001 reads a program (a program code), a software module, and data from the storage 1003 and/or the communication device 1004 out to the memory 1002, and performs various kinds of processes according to them. As the program, a program causing a computer to execute at least some of the operations described in the above embodiment is used. For example, the DL signal receiving unit 101, the UL signal transmitting unit 102, the RRC processing unit 103, the transmission power control unit 104, and the cell selection control unit 105 of the user equipment UE may be implemented by a control program which is stored in the memory 1002 and operates on the processor 1001. Further, for example, the DL signal transmitting unit 201, the UL signal receiving unit 102, the RRC processing unit 203, and the transmission power control unit 104 of the base station eNB may be implemented by a control program which is stored in the memory 1002 and operates on the processor 1001.

Various kinds of processes have been described as being performed by one processor 1001 or may be simultaneously or sequentially performed by two or more processors 1001. The processor 1001 may be implemented by one or more chips. The program may be transmitted from a network via an electric communication line.

The memory 1002 is a computer readable recording medium and configured with at least one of a read only memory (ROM), an erasable programmable ROM (EPROM), an electrically erasable programmable ROM (EEPROM), a random access memory (RAM), and the like. The memory 1002 is also referred to as a "register," a "cache," a "main memory," or the like. The memory 1002 can store programs (program codes), software modules, data or the like which are executable for carrying out the processes described in the present embodiment.

The storage 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The storage 1003 is also referred to as an "auxiliary storage device." The storage medium may be, for example, a database, a server, or any other appropriate medium including the memory 1002 and/or the storage 1003.

The communication device 1004 is hardware (a transceiving device) for performing communication with computers via a wired and/or wireless network and is also referred to as a "network device," a "network controller," a "network card," a "communication module," or the like. For example, the DL signal receiving unit 101 and the UL signal transmitting unit 102 of the user equipment UE may be implemented by the communication device 1004. Further, the DL signal transmitting unit 201 and the UL signal receiving unit 202 of the base station eNB may be implemented by the communication device 1004.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integratedly configured (for example, a touch panel).

The respective devices such as the processor 1001 and the memory 1002 are connected via the bus 1007 to communicate information with each other. The bus 1007 may be configured with a single bus or may be configured with different buses between the devices.

Further, each of the base station eNB and the user equipment UE may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented by at least one of these pieces of hardware.

### (Conclusion of the embodiment)

As described above, according to the present embodiment, provided is a user equipment in a mobile communication system including a base station and the user equipment, including: a receiving unit that receives a predetermined signaling value which is a signaling value other than a default signaling value and a maximum transmission power value associated with the predetermined signaling value from the base station; and a transmission power control unit that controls transmission power by applying the maximum transmission power value corresponding to the predetermined signaling value when the user equipment supports the predetermined signaling value, wherein the predetermined signaling value is a value which is predetermined as a value common to all bands used in the mobile communication system.

The DL signal reception unit 101 is an example of the reception unit, and the transmission power control unit 104 is an example of the transmission power control unit.

Through the above configuration, it is possible to enable an appropriate maximum transmission power value to be applied to the user equipment in the mobile communication system regardless of the band supported by the user equipment.

The predetermined signaling value may be a value common to all channel bandwidths used in the mobile communication system. Through this configuration, it is possible to apply an appropriate maximum transmission power value regardless of the channel band supported by the user equipment.

The user equipment may further include a cell selection control unit that performs cell selection using the maximum transmission power value associated with the predetermined signaling value and a maximum transmission power value not associated with the predetermined signaling value. Through this configuration, it is possible to perform appropriate cell selection.

Also, according to the present embodiment, there is provided a user equipment in a mobile communication system including a base station and the user equipment, including: a receiving unit that receives a predetermined signaling value which is a signaling value other than a default signaling value and a maximum transmission power value associated with the predetermined signaling value from the base station; and a transmission power control unit that measures a predetermined quality in downlink and that controls transmission power by applying the maximum transmission power value corresponding to the predetermined signaling value when the predetermined quality is greater than a predetermined threshold.

Through the above configuration, it is possible to enable an appropriate maximum transmission power value to be applied to the user equipment in the mobile communication system regardless of the band supported by the user equipment.

Also, according to the present embodiment, there is provided A user equipment in a mobile communication system including a base station and the user equipment, including: a receiving unit that receives a first maximum transmission power value and a second maximum transmission power value from the base station; and a transmission power control unit that measures a predetermined quality in downlink and that controls transmission power by applying the second maximum transmission power value when the predetermined quality is greater than a predetermined threshold, and controls transmission power by applying the first maximum transmission power value when the predetermined quality is not greater than the predetermined threshold.

Through the above configuration, it is possible to enable an appropriate maximum transmission power value to be applied to the user equipment in the mobile communication system regardless of the band supported by the user equipment.

Further, according to the present embodiment, provided is a base station in a mobile communication system including the base station and a user equipment, including: a processing unit that generates system information including a predetermined signaling value which is a signaling value other than a default signaling value and a maximum transmission power value associated with the predetermined signaling value; and a transmitting unit that transmits the system information including the predetermined signaling value and the maximum transmission power value, wherein the predetermined signaling value is a value which is predetermined as a value common to all bands used in the mobile communication system.

The RRC processing unit 203 is an example of the processing unit, and the DL signal transmission unit 201 is an example of the transmission unit.

According to the above configuration, it is possible to enable an appropriate maximum transmission power value to be applied to the user equipment in the mobile communication system regardless of the band supported by the user equipment.

The exemplary embodiment of the present invention has been described above, but the disclosed invention is not limited to the above embodiment, and those skilled in the art would understand that various modified examples, revised examples, alternative examples, substitution examples, and the like can be made. In order to facilitate understanding of the invention, specific numerical value examples have been used for description, but the numerical values are merely examples, and certain suitable values may be used unless otherwise stated. A classification of items in the above description is not essential to the present invention, matters described in two or more items may be combined and used as necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be performed physically by a plurality of parts.

Notification of information is not limited to the aspects/embodiments described in this specification, but may be performed using other methods. For example, the notification of information may be performed physical layer signaling (such as downlink control information (DCI) or uplink control information (UCI)), upper layer signaling (such as radio resource control (RRC) signal, medium access control (MAC) signaling, or broadcast information (master information block (MIB) and system information block (SIB))), other signals, or combinations thereof. The RRC signaling may be referred to as an RRC message and may be, for example, an RRC connection setup message or an RRC connection reconfiguration message.

The aspects/embodiments described in this specification may be applied to systems employing long term evolution (LTE), LTE-advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), or other appropriate systems and/or next-generation systems to which the systems are extended.

Further, in the processing procedures, the sequences, the flowcharts, and the like of the respective aspects/embodiments described in this specification, the order may be changed as long as there is no inconsistency. For example, for the methods described in this specification, elements of various steps are presented in an exemplary order, and the present invention is not limited to the presented specific order.

Input and output information and the like may be stored in a specific place (for example, a memory) or may be managed through a management table. Input and output information and the like may be overwritten, updated, or additionally written. Outputted information and the like may be deleted. Input information and the like may be transmitted to another device.

A notification of predetermined information (for example, a notification indicating that "it is X") is not limited to an explicit notification, and an implicit notification may be given (for example, a notification of predetermined information may not be given).

Information, signals, and the like described in this specification may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or an arbitrary combination thereof.

The terms described in this specification and/or terms necessary for understanding this specification may be replaced with terms having the same or similar meanings. For example, a message may be a signal.

Further, information, parameters, and the like described in this specification may be indicated by absolute values, may be indicated by relative values from predetermined values, or may be indicated by corresponding other information. In addition, a reference signal may be abbreviated as a "RS" or may be called a pilot depending on an applied standard.

Specific operations which are performed by the base station in this specification may be performed by an upper node thereof in some cases. In a network including one or more network nodes including a base station, various operations which are performed to communicate with a user equipment UE can be apparently performed by the base station and/or network nodes (for example, an MME or an S-GW can be considered but the network nodes are not limited thereto) other than the base station 20. A case in which the number of network nodes other than the base station is one has been described above, but a combination of plural different network nodes (for example, an MME and an S-GW) may be used.

The aspects described in this specification may be used alone, may be used in combination, or may be switched with implementation thereof.

The user equipment UE may also be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several appropriate terms by those skilled in the art.

The base station may be referred to as an NodeB (NB), an enhanced NodeB (eNB), a base station, gNB or some other appropriate terms by those skilled in the art.

The terms "determining (determining)" and "deciding (determining)" used in this specification may include various types of operations. For example, "determining" and "deciding" may include deeming that to perform judging, calculating, computing, processing, deriving, investigating, looking up (e.g., search in a table, a database, or another data structure), or ascertaining is to perform "determining" or "deciding". Furthermore, "determining" and "deciding" may include deeming that to perform receiving (e.g., reception of information), transmitting (e.g., transmission of information), input, output, or accessing (e.g., accessing data in memory) is to perform "determining" or "deciding". Furthermore, "determining" and "deciding" may include deeming that to perform resolving, selecting, choosing, establishing, or comparing is to perform "determining" or "deciding". Namely, "determining" and "deciding" may include deeming that some operation is to perform "determining" or "deciding".

An expression "on the basis of ∼" which is used in this specification does not refer to only "on the basis of only ∼," unless apparently described. In other words, the expression "on the basis of ∼" refers to both "on the basis of only ∼" and "on the basis of at least ∼."

So long as terms "include" and "including" and modifications thereof are used in this specification or the appended claims, the terms are intended to have a comprehensive meaning similar to a term "comprising." A term "or" which is used in this specification or the claims is intended not to mean an exclusive or.

In the entire disclosure, for example, when an article such as a, an, or the is added in translation into English, such an article refers to including the plural unless otherwise recognized from the context.

The present invention is not limited to the above embodiments, and various modified examples, revised examples, alternative examples, substitution examples, and the like are included in the present invention without departing from the spirit of the present invention.

This application is based on and claims priority to Japanese patent application No. 2016-91553 filed on April 28, 2016, and Japanese patent application No. 2017-17985 filed on February 2, 2017, and the entire contents of the Japanese Patent Application No. 2016-91553 and Japanese patent application No. 2017-17985 are incorporated herein by reference.

### EXPLANATIONS OF LETTERS OR NUMERALS

- UE: user equipment
- 101: DL signal receiving unit
- 102: UL signal transmitting unit
- 103: RRC processing unit
- 104: transmission power control unit
- 105: cell selection control unit
- eNB: base station
- 201: DL signal transmitting unit
- 202: UL signal receiving unit
- 203: RRC processing unit
- 204: transmission power control unit
- 1001: processor
- 1002: memory
- 1003: storage
- 1004: communication device
- 1005: input device
- 1006: output device
- 1007: bus

## Claims

1. A user equipment in a mobile communication system including a base station and the user equipment, comprising:
a receiving unit that receives a predetermined signaling value which is a signaling value other than a default signaling value and a maximum transmission power value associated with the predetermined signaling value from the base station; and
a transmission power control unit that controls transmission power by applying the maximum transmission power value corresponding to the predetermined signaling value when the user equipment supports the predetermined signaling value,
wherein the predetermined signaling value is a value which is predetermined as a value common to all bands used in the mobile communication system.

2. The user equipment according to claim 1,
wherein the predetermined signaling value is a value common to all channel bandwidths used in the mobile communication system.

3. The user equipment according to claim 1 or 2, further comprising,
a cell selection control unit that performs cell selection using the maximum transmission power value associated with the predetermined signaling value and a maximum transmission power value not associated with the predetermined signaling value.

4. A user equipment in a mobile communication system including a base station and the user equipment, comprising:
a receiving unit that receives a predetermined signaling value which is a signaling value other than a default signaling value and a maximum transmission power value associated with the predetermined signaling value from the base station; and
a transmission power control unit that measures a predetermined quality in downlink and that controls transmission power by applying the maximum transmission power value corresponding to the predetermined signaling value when the predetermined quality is greater than a predetermined threshold.

5. A user equipment in a mobile communication system including a base station and the user equipment, comprising:
a receiving unit that receives a first maximum transmission power value and a second maximum transmission power value from the base station; and
a transmission power control unit that measures a predetermined quality in downlink and that controls transmission power by applying the second maximum transmission power value when the predetermined quality is greater than a predetermined threshold, and controls transmission power by applying the first maximum transmission power value when the predetermined quality is not greater than the predetermined threshold.

6. A base station in a mobile communication system including the base station and a user equipment, comprising:
a processing unit that generates system information including a predetermined signaling value which is a signaling value other than a default signaling value and a maximum transmission power value associated with the predetermined signaling value; and
a transmitting unit that transmits the system information including the predetermined signaling value and the maximum transmission power value,
wherein the predetermined signaling value is a value which is predetermined as a value common to all bands used in the mobile communication system.

7. A communication method executed by a user equipment in a mobile communication system including a base station and the user equipment, comprising:
a step of receiving a predetermined signaling value which is a signaling value other than a default signaling value and a maximum transmission power value associated with the predetermined signaling value from the base station; and
a step of controlling transmission power by applying the maximum transmission power value corresponding to the predetermined signaling value when the user equipment supports the predetermined signaling value,
wherein the predetermined signaling value is a value which is predetermined as a value common to all bands used in the mobile communication system.
